# EUROPÄISCHE PATENTANMELDUNG

(11) **EP 4 807 350 A1**
(43) Veröffentlichungstag der Anmeldung: **16.09.2026**
(21) Anmeldenummer: 25162482.1
(22) Anmeldetag: 10.03.2025
(51) Int. Cl.: G01N 23/00, G01N 35/02

(54) **GERÄT, SYSTEM UND VERFAHREN ZUR HANDHABUNG VON MITTELS RÖNTGENSTRAHLUNG ZU ANALYSIERENDEN PROBEN**

(71) Anmelder: Georg-August-Universität Göttingen Stiftung Öffentlichen Rechts, 37073 Göttingen (DE)
(72) Erfinder: Bartels, Matthias, 37075 Göttingen (DE); Reichardt, Marius, 37075 Göttingen (DE); Ruhlandt, Aike, 29664 Walsrode (DE)
(74) Vertreter: Schott, Jakob Valentin

(57) **Zusammenfassung**

Es wird ein Gerät zur Handhabung von mittels Röntgenstrahlung zu analysierenden Proben bereitgestellt, umfassend: eine Analysekammer; eine Strahlungsquelle, die dazu ausgelegt ist, Röntgenstrahlung in die Analysekammer auszustrahlen; eine Transportvorrichtung, die dazu ausgelegt ist, eine Probe aus einer Lagerungsposition außerhalb der Analysekammer entlang eines Transportpfades in eine Analyseposition innerhalb der Analysekammer zu bewegen; und eine Strahlenfalle, durch welche der Transportpfad nichtlinear verläuft, wobei die Strahlenfalle so ausgelegt ist, dass sich die Intensität der Röntgenstrahlung entlang des Transportpfades in Richtung zu der Lagerungsposition reduziert. Ein System und Verfahren zur Handhabung von mittels Röntgenstrahlung zu analysierenden Proben werden ebenso beschrieben.

## Beschreibung

Die Erfindung liegt im Bereich der Handhabung von mittels Röntgenstrahlung zu analysierenden Proben.

In vielen Anwendungsfällen werden Proben mittels Röntgenstrahlung untersucht. Dabei kann die Röntgenstrahlung beispielsweise genutzt werden, um die Transparenz der Probe für Röntgenstrahlen zu bestimmen. Insbesondere können Röntgenbilder der Probe aufgenommen werden, beispielsweise als Teil einer Computertomografie. Bei entsprechend klein dimensionierten Proben ist dieser Ansatz auch unter dem Begriff Mikrocomputertomographie (µCT) bekannt. Es ist auch möglich, die von der Probe induzierte Röntgenbeugung zu bestimmen, insbesondere durch Röntgendiffraktometrie. Weitere Röntgenuntersuchungen wie z.B. Röntgenabsorptionsspektroskopie oder Röntgenfluoreszenzanalyse finden ebenso Verwendung.

Es ist bekannt, für derartige Röntgenuntersuchungen eine Probe direkt auf einem Probenträger zu platzieren, und den Probenträger anschließend manuell in eine Analysekammer eines Röntgenanalysegeräts einzubringen. Anschließend wird eine Strahlungsquelle des Röntgenanalysegeräts aktiviert, sodass in die Analysekammer Röntgenstrahlung ausgestrahlt wird. Die Röntgenstrahlung wechselwirkt mit der Probe in der Analysekammer. Ein Detektor des Röntgenanalysegeräts detektiert Röntgenstrahlung, sodass anhand der Detektorsignale auf eine Wechselwirkung der Probe mit der Röntgenstrahlung geschlossen werden kann.

Vor diesem Hintergrund zielt die vorliegende Erfindung darauf ab, die Handhabung von mittels Röntgenstrahlung zu analysierenden Proben zu verbessern.

Gemäß einem ersten Aspekt wird ein Gerät zur Handhabung von mittels Röntgenstrahlung zu analysierenden Proben bereitgestellt. Das Gerät umfasst eine Analysekammer, die dazu ausgelegt ist, eine Probe aufzunehmen, wobei die Analysekammer eine Seitenwand mit einer Eingangsöffnung umfasst. Das Gerät umfasst eine Strahlungsquelle, die dazu ausgelegt ist, Röntgenstrahlung in die Analysekammer auszustrahlen. Das Gerät umfasst ferner eine Transportvorrichtung, die dazu ausgelegt ist, eine Probe aus einer Lagerungsposition außerhalb der Analysekammer entlang eines Transportpfades in eine Analyseposition innerhalb der Analysekammer zu bewegen, wobei der Transportpfad durch die Eingangsöffnung verläuft. Das Gerät umfasst außerdem eine Strahlenfalle, durch welche der Transportpfad nichtlinear verläuft, wobei die Strahlenfalle so ausgelegt ist, dass sich die Intensität der Röntgenstrahlung entlang des Transportpfades in Richtung zu der Lagerungsposition reduziert.

Es versteht sich, dass sich die Reduzierung der Intensität der Röntgenstrahlung auf einen Zustand bezieht, in dem die Strahlungsquelle die Röntgenstrahlung in die Analysekammer ausstrahlt. Unter einer Reduktion der Intensität der Röntgenstrahlung entlang des Transportpfades in Richtung zu der Lagerungsposition ist zu verstehen, dass die Intensität der Röntgenstrahlung an der Lagerungsposition geringer ist als an einer, mehreren, oder sämtlichen anderen Positionen auf dem Transportpfad, insbesondere geringer als an der Analyseposition. Die Strahlenfalle ist demnach so ausgelegt, dass sie ein Vordringen von Röntgenstrahlen aus der Analysekammer hin zu der Lagerungsposition erschwert oder gar vollkommen unterbindet. Die Intensität der Röntgenstrahlung fällt vorzugsweise entlang des Transportpfades monoton oder streng monoton ab. Die Strahlenfalle ist insbesondere so ausgelegt, dass die Intensität der Röntgenstrahlung an der Lagerungsposition mindestens um einen vorbestimmten Intensitätswert geringer ist als an der Analyseposition oder sich ausgehend von der Analyseposition bis zu der Lagerungsposition mindestens um einen vorbestimmten Intensitätsanteil reduziert, insbesondere um ≥ 90%, ≥ 95%, ≥ 99% oder ≥ 99,9%. Die Strahlenfalle ist insbesondere so ausgelegt, dass die Intensität der Röntgenstrahlung an der Lagerungsposition auf einem unterhalb eines vorbestimmten Intensitätswerts liegenden Wert liegt oder auf einen unterhalb eines vorbestimmten Intensitätsanteils liegenden Anteils reduziert ist, insbesondere auf < 15%, < 10%, < 5%, < 1% oder < 0,1 %. Die Strahlenfalle ist insbesondere so auslegt, dass Röntgenphotonen aus der Analysekammer in die Strahlenfalle gelangen können und dort absorbiert werden.

Der Transportpfad verläuft durch die Strahlenfalle nichtlinear, folgt dort also einer Kurve. Der Transportpfad kann in der Strahlenfalle eine oder mehrere Ecken aufweisen. Die Ecken können dabei jeweils einen Winkel zwischen 45°-135°, insbesondere 60°-120°, vorzugsweise 90° einschließen. Die von den Ecken eingeschlossenen Winkel können sich z.B. auf 180° oder 270° summieren. Der Transportpfad kann in der Strahlenfalle ausschließlich in einer Ebene liegen. Es ist jedoch auch denkbar, dass der Transportpfad in der Strahlenfalle aus mehreren aneinander angrenzenden Transportpfadabschnitten zusammengesetzt ist, von denen zwei oder mehr in unterschiedlichen, zueinander schräg stehenden Ebenen liegen. Aufgrund des nichtlinearen Verlaufs des Transportpfads durch die Strahlenfalle kann man sagen, dass die Strahlenfalle als Strahlenschikane oder Beladeschikane fungiert.

Das Gerät ist beispielsweise so ausgebildet, dass die Analysekammer permanent durch Öffnung(en), durch die der Transportpfad verläuft, von außen zugänglich ist. Das Gerät kann so ausgelegt sein, dass die Probe zu jeglichem Zeitpunkt entlang des Transportpfades in die Analyseposition oder in die Lagerungsposition gebracht werden kann. Beispielsweise ist der Transportpfad permanent unterbrechungsfrei bzw. frei von Hindernissen. Insbesondere ist eine jede Öffnung, durch die der Transportpfad verläuft (z.B. die Eingangsöffnung), permanent offen. Dabei sind insbesondere kein Verschluss und keine Türe für die jeweilige Öffnung vorgesehen.

Das Gerät kann so ausgelegt sein, dass die Strahlungsquelle die Röntgenstrahlung ausstrahlt, während sich die Probe außerhalb der Analysekammer befindet (z.B. während die Probe auf dem Transportpfad bewegt wird oder während sich die Probe in der Lagerungsposition befindet). Das Gerät kann so ausgelegt sein, dass die Probe entlang des Transportpfades aus der Lagerungsposition in die Analyseposition bewegt wird, während die Strahlungsquelle die Röntgenstrahlung ausstrahlt. Das Gerät kann alternativ oder zusätzlich so ausgelegt sein, dass die Probe entlang des Transportpfades aus der Analyseposition in die Lagerungsposition bewegt wird, während die Strahlungsquelle die Röntgenstrahlung ausstrahlt. In der Analysekammer kann eine Vielzahl von vorbestimmten Analysepositionen vorgesehen sein. In diesem Fall kann sich der Transportpfad von der Lagerungsposition zu einer ausgewählten oder beliebigen dieser Analysepositionen erstrecken.

Die Analysekammer kann so ausgebildet sein, dass sie lediglich durch die Eingangsöffnung zugänglich ist oder/und dass Röntgenstrahlen die Analysekammer ausschließlich durch die Eingangsöffnung verlassen können. Die Seitenwand ist insbesondere so ausgebildet, dass sie Röntgenstrahlung abschirmt. Die Seitenwand kann im einsatzbereiten Zustand des Geräts waagrecht oder senkrecht angeordnet sein, sie kann also insbesondere eine Oberseite, eine Unterseite, eine linke, rechte, vordere oder hintere Seite der Analysekammer bilden. Die Analysekammer kann eine von der Eingangsöffnung separate Strahlungseintrittsöffnung aufweisen, wobei die Strahlungsquelle so an der Strahlungseintrittsöffnung angeordnet ist, dass die ausgestrahlten Röntgenstrahlen durch die Strahlungseintrittsöffnung in die Analysekammer vordringen. Alternativ ist denkbar, dass die Strahlungsquelle innerhalb der Analysekammer angeordnet ist.

Die Transportvorrichtung kann außerhalb der Analysekammer angeordnet sein, zumindest während sie eine Probe außerhalb der Analysekammer bewegt. Bei der Lagerungsposition kann es sich um eine vorbestimmte Lagerungsposition aus einer Vielzahl von vorbestimmten Lagerungspositionen handeln. Die jeweilige Lagerungsposition ist dabei insbesondere bezogen auf die Analysekammer festgelegt. Bei der Analyseposition kann es sich um eine vorbestimmte Analyseposition aus einer Vielzahl von vorbestimmten Analysepositionen handeln. Die jeweilige Analyseposition ist dabei insbesondere bezogen auf die Analysekammer festgelegt.

Die Strahlenfalle kann als passive Strahlenfalle ausgeführt sein. Die Strahlenfalle ist insbesondere als unbewegliches Bauteil ausgebildet. Die Strahlenfalle ist z.B. außerhalb der Analysekammer angeordnet. Die Strahlenfalle kann bezogen auf die Analysekammer unbeweglich ausgestaltet sein. Die Strahlenfalle kann ein (z.B. im wesentlichen topfförmiges) Gehäuse umfassen, durch dessen Inneres sich der Transportpfad erstreckt. Das Gehäuse kann abnehmbar an die Analysekammer gekoppelt sein. Beispielsweise ist die Transportvorrichtung bezogen auf das Gehäuse festgelegt. Das Gerät kann so ausgebildet sein, dass ein Einbringen einer Probe in die Analysekammer nur durch die Strahlenfalle hindurch möglich ist, beispielsweise ausschließlich entlang des Transportpfades.

Beispielsweise umfasst die Strahlenfalle mindestens eine bezogen auf die Analysekammer unbewegliche Wand mit einer ersten Oberfläche und einer gegenüberliegenden zweiten Oberfläche, wobei sich ein Abschnitt des Transportpfads zwischen einem der ersten Oberfläche zugewandten ersten Raumbereich und einem der zweiten Oberfläche zugewandten zweiten Raumbereich erstreckt. In diesem Fall kann man sagen, dass der Transportpfad von dem ersten Raumbereich zu dem zweiten Raumbereich verläuft. Dabei kann der Transportpfad über die Wand hinweg, unter der Wand hindurch, seitlich an der Wand vorbei, oder durch eine Durchgangsöffnung in der Wand hindurch verlaufen. Die mindestens eine Wand kann bezogen auf die Seitenwand der Analysekammer oder/und die Eingangsöffnung schräg (z.B. senkrecht) angeordnet sein.

Die mindestens eine Wand kann eine (z.B. plane) Wand umfassen, die in einer von dem Transportpfad (z.B. senkrecht) geschnittenen Ebene liegt. Es ist aber auch möglich, dass die Wand gekrümmt ausgebildet ist.

Die mindestens eine Wand kann eine Wand umfassen, die eine Durchgangsöffnung aufweist, wobei der Transportpfad durch die Durchgangsöffnung verläuft. Diese Wand kann in der von dem Transportpfad geschnittenen Ebene liegen oder gekrümmt ausgebildet sein. Die Durchgangsöffnung kann so ausgebildet sein, dass ein Hindurchgreifen durch einen Benutzer unterbunden wird.

Eine oder mehrere der mindestens einen Wand kann bzw. können senkrecht zu einem Abschnitt des Transportpfades stehen, der sich von dem ersten auf den zweiten Raumbereich der jeweiligen Wand erstreckt. Falls eine Wand eine Durchgangsöffnung aufweist, verläuft dieser Abschnitt des Transportpfades durch die Durchgangsöffnung.

Die mindestens eine Wand kann mehrere Wände umfassen, die labyrinthartig oder/und zueinander schräg (z.B. senkrecht) angeordnet sind. Eine jede dieser Wände kann in einer von dem Transportpfad geschnittenen Ebene liegen oder gekrümmt ausgebildet sein, oder/und kann eine Durchgangsöffnung aufweisen durch welche der Transportpfad verläuft. Insbesondere sind entlang des Transportpfades aufeinander folgende Wände der Strahlenfalle zueinander schräg (z.B. senkrecht) angeordnet. So kann im einsatzbereiten Zustand des Geräts eine erste Wand horizontal liegen und eine entlang des Transportpfades von der Lagerungsposition zur Analyseposition auf die erste Wand folgende zweite Wand vertikal liegen. Die Seitenwand der Analysekammer mit der Eingangsöffnung kann horizontal liegen.

Eine oder mehrere der mindestens einen Wand kann bzw. können jeweils als Strahlenschutzwand ausgebildet sein. Die Strahlenschutzwand kann ein Material umfassen, das üblicherweise zum Blockieren von Röntgenstrahlen genutzt wird. Beispielsweise ist die Strahlenschutzwand aus diesem Material gefertigt oder mit diesem Material beschichtet. Das Material kann eine Dichte von > 8 g/cm³, insbesondere > 10 g/cm³ aufweisen. Das Material kann ein Kompositwerkstoff sein, der Kunststoff sowie oder/und Blei enthält. Diese Ausführungen gelten ebenso für das Gehäuse der Strahlenfalle.

Die Strahlenfalle oder/und deren Gehäuse oder/und deren mindestens eine Wand kann als 3D-gedrucktes Bauteil ausgebildet sein.

Beispielsweise umfasst das Gerät eine Vielzahl von bezogen auf die Analysekammer unbeweglich angeordneten Bereithaltungseinheiten, wobei jede Bereithaltungseinheit jeweils eine Lagerungsposition außerhalb der Analysekammer vorgibt, wobei die Transportvorrichtung dazu ausgelegt ist, eine Probe wahlweise aus einer der Lagerungspositionen entlang eines jeweiligen Transportpfades in eine Analyseposition innerhalb der Analysekammer zu bewegen. Eine oder mehrere der Bereithaltungseinheiten können jeweils eine Aussparung umfassen, die dazu ausgelegt ist, einen Probenständer aufzunehmen, der die Probe trägt. Die Bereithaltungseinheiten oder/und die Aussparungen können voneinander periodisch beabstandet sein. Die Bereithaltungseinheiten oder/und die Aussparungen können in derselben Ebene angeordnet sein. Die Bereithaltungseinheiten oder/und die Aussparungen können auf einer Kreisbahn oder auf einer Geraden angeordnet sein.

Das Gerät kann so ausgelegt sein, dass eine der Bereithaltungseinheiten, aus deren Lagerungsposition (z.B. zuletzt) eine Probe durch die Transportvorrichtung entlang des Transportpfads in Richtung der Analyseposition bewegt wurde, (z.B. selbsttätig) blockiert, sodass sie keine andere Probe in ihrer Lagerungsposition bereithalten kann. Hierzu kann insbesondere die Aussparung der Bereithaltungseinheit blockiert werden, beispielsweise durch Verschließen mit einer Abdeckung oder durch Positionieren eines Blockierelements in der Aussparung derart, dass die Aussparung nicht mehr zugänglich ist. Das Gerät kann so ausgelegt sein, dass die Blockierung der Bereithaltungseinheit erst dann gelöst wird, wenn die Probe aus der Analyseposition entlang des Transportpfades in Richtung der Lagerungsposition dieser oder einer anderen Bereithaltungseinheit bewegt wird.

Gemäß einem zweiten Aspekt wird ein Probenständer bereitgestellt. Der Probenständer ist dazu ausgelegt, eine mittels Röntgenstrahlung zu analysierende Probe zu tragen. Der Probenständer ist insbesondere dazu ausgelegt, die Probe während der Durchführung einer Röntgenuntersuchung der Probe zu tragen. Der Probenständer kann so ausgelegt sein, dass die Transportvorrichtung des Geräts gemäß dem ersten Aspekt an den Probenständer koppeln und diesen bewegen kann, um die von dem Probenständer getragene Probe entlang des Transportpfades zu bewegen. Der Probenständer kann dazu ausgelegt sein, an eine der Bereithaltungseinheiten des Geräts gemäß dem ersten Aspekt zu koppeln, sodass die von dem Probenständer getragene Probe in der dieser Bereithaltungseinheit zugeordneten Lagerungsposition positioniert wird.

Der Probenständer kann so ausgelegt sein, dass die Probe direkt auf eine Oberseite des Probenständers zu platzieren ist, damit der Probenständer die Probe trägt. Es ist aber auch denkbar, dass die Probe an einem Probenträger befestigt ist, der wiederum von dem Probenständer getragen wird. Der Probenständer kann also alternativ oder zusätzlich so ausgelegt sein, dass ein an der Probe befestigter Probenträger an den Probenständer zu koppeln ist, damit der Probenständer die Probe trägt.

Der Probenständer kann eine Ausnehmung umfassen, die so ausgelegt ist, dass der Probenträger daran koppeln kann, insbesondere (z.B. nur) in einer Vielzahl vorbestimmter Kopplungsposen. Beispielsweise ist die Ausnehmung so ausgelegt, dass der Probenträger (z.B. nur) in einer oder (z.B. nur) in mehreren vorbestimmten Rotationswinkeln bezogen auf eine Mittelachse der Ausnehmung an den Probenständer koppeln kann. Hierzu kann die Ausnehmung einen polygonalen Querschnitt aufweisen.

Die Ausnehmung kann zwei von außen zugängliche Öffnungen aufweisen und insbesondere als Kanal in dem Probenständer ausgebildet sein. Die beiden von außen zugänglichen Öffnungen können axial beabstandet sein. Insbesondere ist der Kanal dazu ausgelegt, dass der an den Probenständer gekoppelte Probenträger durch Einführen eines Werkzeugs in den Kanal von dem Probenständer entkoppelt werden kann. Der Kanal kann sich linear erstrecken, insbesondere parallel zu oder entlang einer von der Oberseite zu einer Unterseite des Probenständers verlaufenden Achse, wobei diese Achse eine zentrale Achse oder/und eine Symmetrieachse des Probenständers sein kann. Die Oberseite des Probenständers ist dabei einer Probe zugewandt, wenn der Probenständer diese Probe trägt. Der Probenständer kann bezogen auf die Achse axialsymmetrisch geformt sein. Die Oberseite des Probenständers kann von einem scheibenförmigen ersten Endabschnitt, insbesondere einem kreisscheibenförmigen ersten Endabschnitt gebildet sein. Die Unterseite des Probenständers kann von einem scheibenförmigen zweiten Endabschnitt, insbesondere einem kreisscheibenförmigen zweiten Endabschnitt gebildet sein.

Der Probenständer kann so ausgelegt sein, dass die Oberseite in Ruhelage nach einem Platzieren des Probenständers auf einer flachen Oberfläche von der flachen Oberfläche weiter entfernt ist als die Unterseite. Der Probenständer kann selbstaufrichtend ausgebildet sein.

Beispielsweise weist der Probenständer an der Unterseite, insbesondere an dem zweiten Endabschnitt, einen Kopplungsfortsatz auf. Der Probenständer kann so ausgelegt sein, dass (z.B. ausschließlich) der Kopplungsfortsatz und ein Teil oder Punkt des zweiten Endabschnitts nach einem Platzieren des Probenständers auf einer flachen Oberfläche in Ruhelage auf dieser flachen Oberfläche aufliegen. Der Kopplungsfortsatz kann entlang der Achse von der Unterseite weg verjüngend ausgelegt sein, beispielsweise kegel- oder kegelstumpfförmig.

Der Probenständer kann so ausgebildet sein, dass sein Masseschwerpunkt näher an der Unterseite liegt als an der Oberseite. Der Probenständer kann zwischen der Oberseite und der Unterseite verjüngt bzw. schmaler ausgeführt sein. Beispielsweise weist der Probenständer eine Seitenfläche auf, die überall näher an der Achse liegt als die Oberseite oder/und die Unterseite. Ein Längsschnitt des Probenständers in einer Ebene, in welcher die Achse liegt, kann eine im Wesentlichen hantelförmige Kontur aufweisen.

Der Probenständer kann aus Kunststoff gefertigt sein. Der Probenständer kann insbesondere aus einem Kompositmaterial gefertigt sein, das Kunststoff und Wolfram umfasst. Der Probenständer kann additiv gefertigt sein, insbesondere durch ein 3D-Druckverfahren.

Gemäß einem dritten Aspekt wird ein Probenträger bereitgestellt. Der Probenträger ist dazu ausgelegt, eine mittels Röntgenstrahlung zu analysierende Probe zu tragen. Der Probenträger ist insbesondere dazu ausgelegt, die Probe während der Durchführung einer Röntgenuntersuchung der Probe zu tragen. Der Probenträger ist so ausgelegt, dass die Probe direkt mit dem Probenträger in Kontakt steht, wenn der Probenträger die Probe trägt. Der Probenträger ist also dazu ausgelegt, direkt an einer Probe befestigt zu werden oder umgekehrt. Der Probenträger ist insbesondere dazu ausgelegt, mit einer Probe oder/und einem Probensubstrat, insbesondere einem Gewebesubstrat, verbunden oder verklebt zu werden. Zum Verkleben des Probenträgers mit einer Probe kann eine Oberfläche des Probenträgers mit einem Klebstoff beschichtet sein. Der Probenträger kann als Einmalartikel ausgebildet sein, sodass er zusammen mit der daran befestigten Probe nach der Röntgenanalyse zu lagern oder zu entsorgen ist.

Der Probenträger kann zum Koppeln an den Probenständer gemäß dem zweiten Aspekt ausgelegt sein. Der Probenträger kann einen Vorsprung umfassen, der dazu ausgelegt ist, in die Ausnehmung des Probenständers eingesetzt zu werden, um den Probenträger an den Probenständer zu koppeln. Der Vorsprung kann so ausgelegt sein, dass er (z.B. nur) in einer oder (z.B. nur) in mehreren vorbestimmten Rotationswinkeln bezogen auf eine Mittelachse der Ausnehmung in die Ausnehmung einsetzbar ist. In diesem Fall ist der Vorsprung beispielsweise als senkrechter Zylinder mit mehr polygonaler Grundfläche ausgebildet. Der Vorsprung kann alternativ kreiszylindrisch geformt sein, insbesondere als Pin.

Der Probenträger hat insbesondere eine Oberseite und eine Unterseite. Die Oberseite ist in Kontakt mit der Probe, wenn der Probenträger diese Probe trägt. Die Oberseite kann plan ausgebildet sein. Der Vorsprung kann die Unterseite bilden oder an der Unterseite angeordnet sein. Der Probenträger kann axialsymmetrisch geformt sein. Die Oberseite oder/und die Unterseite kann einen kreisförmigen Umriss aufweisen.

Der Probenträger kann einen die Oberseite bildenden zylindrischen Abschnitt umfassen. Der Probenträger kann einen daran anschließenden kegelstumpfförmigen Abschnitt umfassen. Der Vorsprung kann an dem kegelstumpfförmigen Abschnitt angeordnet sein.

Der Probenträger ist beispielsweise derart an einen von einer der Bereithaltungseinheiten des Geräts gemäß dem ersten Aspekt bereitgehaltenen Probenständer gemäß dem zweiten Aspekt koppelbar, dass eine an dem Probenträger befestigte, insbesondere mit diesem verbundene oder verklebte Probe in der Lagerungsposition dieser Bereithaltungseinheit angeordnet wird.

Der Probenträger kann so ausgelegt sein, dass er von einer Gewebestanze umschließbar ist und dabei für die Gewebestanze eine Linearführung bereitstellt, wobei die Linearführung insbesondere senkrecht zu der Oberseite des Probenträgers oder/und senkrecht zu einer mit dem Probenträger verbundenen oder verklebten Oberfläche der Probe oder des Probensubstrats verläuft. Die Linearführung kann insbesondere von der Umfangsfläche des Probenträgers bereitgestellt werden. Die Umfangsfläche des zylindrischen Abschnitts oder/und die Umfangsfläche des Vorsprungs kann so ausgelegt sein, dass sie einer auf den Probenträger aufgesetzten Gewebestanze als Linearführung dient. Der Probenträger kann so ausgelegt sein, dass eine Schneide der Gewebestanze um den Probenträger herum angeordnet ist, wenn die Gewebestanze entlang der Linearführung bewegt wird. Eine Kontur der von der Gewebestanze ausgestanzten Gewebeprobe kann im Wesentlichen einer Kontur der Oberseite des Probenträgers entsprechen und insbesondere kreisförmig sein.

Der Probenträger kann aus Kunststoff gefertigt sein. Der Probenträger kann insbesondere aus einem Kompositmaterial gefertigt sein, das Kunststoff und Wolfram umfasst. Der Probenträger kann additiv gefertigt sein, insbesondere durch ein 3D-Druckverfahren.

Gemäß einem vierten Aspekt wird ein Set zur Handhabung von mittels Röntgenstrahlung zu analysierenden Proben bereitgestellt. Das Set umfasst den Probenständer gemäß dem zweiten Aspekt sowie den Probenträger gemäß dem dritten Aspekt. Es ist auch denkbar, dass das Set eine Vielzahl von Probenträgern gemäß dem dritten Aspekt umfasst, die für unterschiedliche Typen oder/und Größen von Proben ausgelegt sind. Das Set kann ferner die Gewebestanze umfassen oder, im Fall unterschiedlicher Probenträger, eine Vielzahl von zu dem jeweiligen Probenträger passenden Gewebestanzen.

Gemäß einem fünften Aspekt wird ein System zur Handhabung von mittels Röntgenstrahlung zu analysierenden Proben bereitgestellt. Das System umfasst das Gerät gemäß dem ersten Aspekt. Das System umfasst ferner mindestens einen Probenständer (z.B. gemäß dem zweiten Aspekt) oder/und mindestens einen Probenträger (z.B. gemäß dem dritten Aspekt). Insbesondere umfasst das System einen Probenständer (z.B. gemäß dem zweiten Aspekt) für eine Probe, wobei jede Bereithaltungseinheit zum Bereithalten eines jeweiligen Probenständers ausgelegt ist, und wobei das System so ausgelegt ist, dass die Transportvorrichtung an einen bereitgehaltenen Probenständer koppeln und diesen Probenständer im gekoppelten Zustand bewegen kann, um eine von diesem Probenständer getragene Probe aus deren Lagerungsposition in die Analyseposition zu bewegen.

Das Gerät kann so ausgelegt sein, dass eine der Bereithaltungseinheiten, von der (z.B. zuletzt) ein Probenständer durch die Transportvorrichtung entfernt wurde, gegen ein Bereithalten eines weiteren Probenständers blockiert ist. Die Blockierung dieser Bereithaltungseinheit kann so lange beibehalten werden, bis eine Freigabevoraussetzung erfüllt ist. Bei der Freigabevoraussetzung kann es sich um das Vorliegen einer Benutzereingabe zur Freigabe der Bereithaltungseinheit, um das Vorliegen einer Unterbrechung der Energieversorgung des Geräts, oder um das Vorliegen eines Steuersignals einer mit dem Gerät kommunikativ verbundenen Steuereinrichtung handeln. Die Blockierung der Bereithaltungseinheit kann derart erfolgen, dass die Bereithaltungseinheit im blockierten Zustand nur ein Bereithalten des von dieser Bereithaltungseinheit zuletzt entnommenen Probenständers gestattet, jedoch keinen anderen Probenständer.

Beispielsweise umfasst der mindestens eine Probenständer eine Unterseite sowie eine Oberseite, die einer Probe zugewandt ist wenn der Probenständer die Probe trägt, wobei der Probenständer so ausgelegt ist, dass die Oberseite in Ruhelage nach einem Platzieren des Probenständers auf einer flachen Oberfläche von der flachen Oberfläche weiter entfernt ist als die Unterseite.

Beispielsweise umfasst das System einen Probenträger (z.B. gemäß dem dritten Aspekt), der dazu ausgelegt ist, mit einer Probe verbunden oder verklebt zu werden, wobei der Probenträger derart an einen von einer der Bereithaltungseinheiten bereitgehaltenen Probenständer koppelbar ist, dass eine mit dem Probenträger verbundene oder verklebte Probe in der Lagerungsposition dieser Bereithaltungseinheit angeordnet wird.

Der Probenständer kann eine Ausnehmung aufweisen, in welche ein Vorsprung des Probenträgers zum Koppeln an den Probenständer einsetzbar ist.

Der Probenträger kann so ausgelegt sein, dass er von einer Gewebestanze umschließbar ist und dabei für die Gewebestanze eine Linearführung bereitstellt, wobei die Linearführung insbesondere senkrecht zu einer mit dem Probenträger verbundenen oder verklebten Oberfläche der Probe verläuft.

Beispielsweise umfasst eine Außenkontur der Durchgangsöffnung einen Abschnitt, der auf eine Außenkontur eines Schnitts durch den mindestens einen Probenständer oder/und durch den mindestens einen Probenträger oder/und durch den mindestens einen Probenständer mit daran gekoppeltem Probenträger abgestimmt ist. Der Schnitt bezieht sich dabei auf eine Schnittebene, die durch den Probenständer oder/und den Probenträger oder/und den Probenständer mit daran gekoppeltem Probenträger verläuft, wenn dieser bei der Bewegung der Probe durch die Transportvorrichtung entlang des Transportpfades in der Durchgangsöffnung positioniert ist. Die Außenkontur des Abschnitts der Durchgangsöffnung kann derart auf die Außenkontur des Schnitts abgestimmt sein, dass sie eine größer skalierte desselben ist oder/und dass die Außenkontur des Schnitts kontaktfrei in die Außenkontur des Abschnitts der Durchgangsöffnung passt. Beispielsweise kann die Außenkontur der Durchgangsöffnung nach Art eines Schlüssellochs ein Passieren des Probenständers oder/und des Probenträgers oder/und des Probenständers mit daran gekoppeltem Probenträger zulassen oder verwehren.

Gemäß einem sechsten Aspekt wird ein Verfahren zur Handhabung von mittels Röntgenstrahlung zu analysierenden Proben bereitgestellt. Das Verfahren kann unter Verwendung des Geräts gemäß dem ersten Aspekt oder/und unter Verwendung des Probenständers gemäß dem zweiten Aspekt oder/und unter Verwendung des Probenträgers gemäß dem dritten Aspekt oder/und unter Verwendung des Sets gemäß dem vierten Aspekt oder/und unter Verwendung des Systems gemäß dem fünften Aspekt durchgeführt werden. Das Verfahren umfasst: Steuerung einer Transportvorrichtung (z.B. Transportvorrichtung des Geräts gemäß dem ersten Aspekt) derart, dass die Transportvorrichtung eine Probe aus einer Lagerungsposition außerhalb einer Analysekammer (z.B. Analysekammer des Geräts gemäß dem ersten Aspekt) entlang eines Transportpfades in eine Analyseposition innerhalb der Analysekammer bewegt, wobei der Transportpfad durch eine Eingangsöffnung in einer Seitenwand der Analysekammer verläuft, wobei eine Strahlungsquelle (z.B. Strahlungsquelle des Geräts gemäß dem ersten Aspekt) vorgesehen ist, die dazu ausgelegt ist, Röntgenstrahlung in die Analysekammer auszustrahlen, wobei der Transportpfad nichtlinear durch eine Strahlenfalle (z.B. Strahlenfalle des Geräts gemäß dem ersten Aspekt) verläuft, und wobei die Strahlenfalle so ausgelegt ist, dass sich die Intensität der Röntgenstrahlung entlang des Transportpfades in Richtung zu der Lagerungsposition reduziert. Das Verfahren umfasst alternativ oder zusätzlich: Koppeln eines mit einer Probe verbundenen oder verklebten Probenträgers (z.B. Probenträger gemäß dem dritten Aspekt) an einen Probenständer (z.B. Probenständer gemäß dem zweiten Aspekt), und Bewegen des Probenständers mit daran gekoppeltem Probenträger, um die mit dem Probenträger verbundene oder verklebte Probe entlang eines Transportpfades aus einer Lagerungsposition außerhalb einer Analysekammer (z.B. Analysekammer des Geräts gemäß dem ersten Aspekt) in eine Analyseposition innerhalb der Analysekammer zu bewegen. Das Verfahren umfasst alternativ oder zusätzlich: Aufkleben eines Probenträgers (z.B. Probenträger gemäß dem dritten Aspekt) auf ein Gewebesubstrat, Platzieren einer Gewebestanze (z.B. Gewebestanze des Sets gemäß dem vierten Aspekt) auf dem der Gewebestanze eine Linearführung bereitstellenden Probenträger, Ausstanzen einer Probe durch Eindrücken der Gewebestanze in das Gewebesubstrat entlang der Linearführung, und Entfernen des Probenträgers mit der damit verklebten Probe von der Gewebestanze. Es versteht sich, dass die einzelnen Schritte in anderer Reihenfolge durchgeführt werden können.

Gemäß der vorliegenden Offenbarung kann es sich bei der Probe um eine Gewebeprobe handeln, insbesondere um eine aus einem Gewebesubstrat ausgestanzte (z.B. zylinderförmige) Gewebeprobe. Bei dem Gewebesubstrat kann es sich um Formalin-fixiertes Paraffin-eingebettetes Gewebe, FFPE, handeln. In diesem Fall kann die Probe als FFPE-Probe bezeichnet werden. Die Probe ist in jeder Raumrichtung vorzugsweise weniger als 5 cm, insbesondere weniger als 2 cm, beispielsweise weniger als 10 mm oder weniger als 5 mm dimensioniert. Die mittels Röntgenstrahlung zu analysierenden Proben können insbesondere mittels µCT zu analysierende Proben sein. Bei dem Gerät gemäß dem ersten Aspekt kann es sich um ein CT-Gerät, insbesondere ein µCT-Gerät handeln. Die Analysekammer des Verfahrens gemäß dem sechsten Aspekt kann eine Analysekammer eines CT-Geräts, insbesondere eines µCT-Geräts sein.

Es versteht sich, dass die zu den jeweiligen Aspekten erwähnten Merkmale auch in den anderen Aspekten vorgesehen sein können. Die Merkmale der einzelnen Aspekte sind demnach kombinierbar, auch wenn dies nicht für jede Merkmalskombination explizit erwähnt ist.

Die Erfindung wird nachfolgend anhand der Zeichnungen näher erläutert. Es zeigen:
- Fig. 1: eine erste perspektivische Ansicht eines beispielhaften Geräts zur Handhabung von mittels Röntgenstrahlung zu analysierenden Proben;
- Fig. 2-4: perspektivische Schnittansichten eines Teils des Geräts aus Fig. 1 in unterschiedlichen Zuständen;
- Fig. 5: eine beispielhafte Variante des Geräts aus Fig. 1;
- Fig. 6: einen beispielhaften Probenständer, einen beispielhaften Probenträger und eine beispielhafte Probe; und
- Fig. 7a-7e: Verfahrensschritte unter Nutzung der Komponenten aus Fig. 1-6.

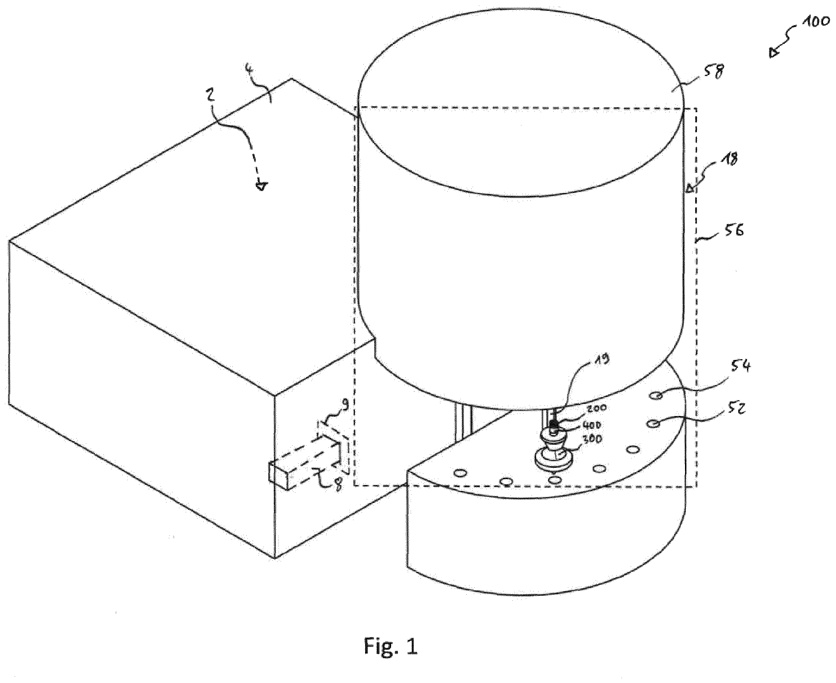

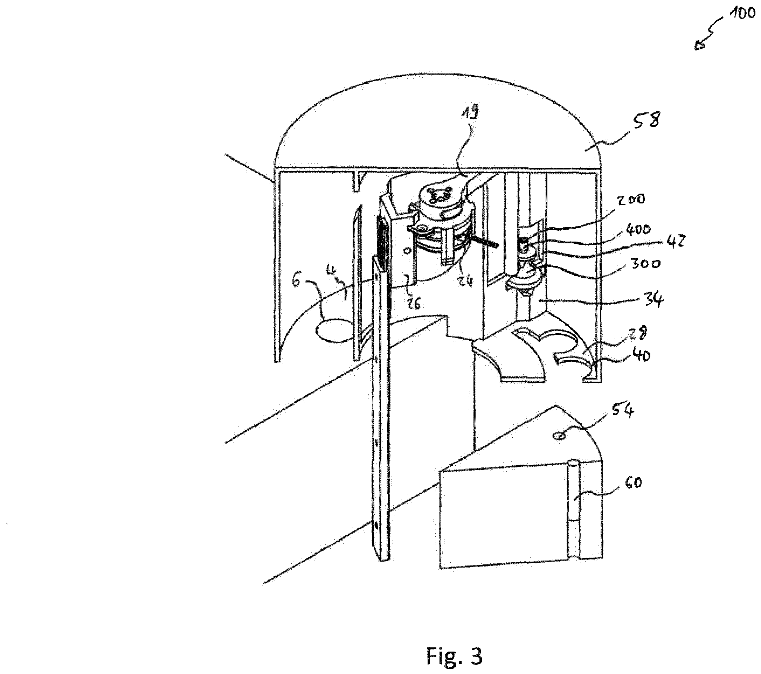

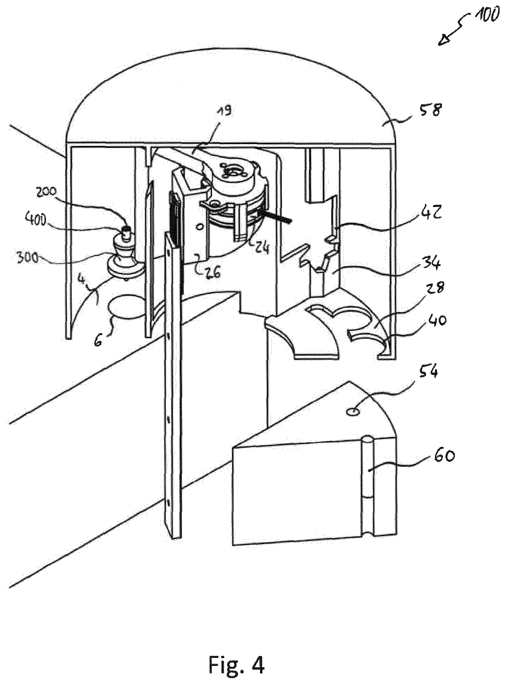

In Fig. 1-4 sind unterschiedliche Ansichten eines beispielhaften Geräts 100 zur Handhabung von mittels Röntgenstrahlung zu analysierenden Proben 200 dargestellt. Bei dem Gerät handelt es sich vorzugsweise um ein µCT-Gerät, das zur Bildgebung von Gewebeproben mit Dimensionen von weniger als 10 x 10 x 10 mm³ ausgelegt ist.

Das Gerät 100 umfasst eine Analysekammer 2 zur Aufnahme einer zu analysierenden Probe 200. Die Analysekammer 2 umfasst eine Seitenwand 4, die eine Oberseite der Analysekammer 2 bildet und eine vertikal passierbare Eingangsöffnung 6 aufweist. Das Gerät 100 umfasst außerdem eine Strahlungsquelle 8, die dazu ausgelegt ist, Röntgenstrahlung durch eine Strahlungseintrittsöffnung 9 in die Analysekammer 2 auszustrahlen. Das Gerät umfasst ferner eine Transportvorrichtung 10, die dazu ausgelegt ist, eine Probe aus einer Lagerungsposition 12 außerhalb der Analysekammer 2 entlang eines Transportpfades 14 in eine Analyseposition 16 innerhalb der Analysekammer 2 zu bewegen, wobei der Transportpfad 14 durch die Eingangsöffnung 6 verläuft.

Die Transportvorrichtung 10 ist außerhalb der Analysekammer 2 angeordnet und umfasst im gezeigten Beispiel einen Greifer 17, einen den Greifer 17 haltenden Arm 19 und eine Antriebsvorrichtung 20, welche dazu ausgebildet ist, den Arm 19 um eine Drehachse 22 zu verschwenken und den Arm 19 parallel zu dieser Drehachse 22 zu verschieben. Hierzu kann die Antriebsvorrichtung 20 einen mit dem Arm 19 verbundenen Drehmotor 24 umfassen, der an einem Schlitten 26 montiert ist, wobei der Schlitten 26 durch einen weiteren Motor parallel zu der Drehachse 22 verschiebbar ist. Andere Ausgestaltungen der Transportvorrichtung 10, beispielsweise als Roboterarm mit sechs Freiheitsgraden, sind ebenso denkbar.

Das Gerät 100 ist so ausgebildet, dass die Analysekammer 2 permanent durch die Öffnungen, durch die der Transportpfad 14 verläuft, von außen zugänglich ist. Es ist daher kein Verschluss und auch keine Türe für die jeweilige Öffnung vorgesehen. Das Gerät 100 kann insbesondere so ausgelegt sein, dass die Strahlungsquelle 8 die Röntgenstrahlung ausstrahlt, während sich die Probe 200 außerhalb der Analysekammer 2 befindet (z.B. während die Probe 200 auf dem Transportpfad 14 bewegt wird oder während sich die Probe 200 in der Lagerungsposition 12 befindet). Um sicherzustellen, dass die Intensität der aus dem Gerät 100 austretenden Röntgenstrahlung ungefährlich ist, ist eine Strahlenfalle 18 vorgesehen, durch welche der Transportpfad 14 nichtlinear verläuft. Im gezeigten Beispiel setzt sich der Transportpfad in der Strahlenfalle 18 aus einem ersten senkrechten Abschnitt, einem daran anschließenden kreisbogenförmigen zweiten Abschnitt und einem daran anschließenden senkrechten dritten Abschnitt zusammen. Die beiden senkrechten Abschnitte verlaufen parallel zu der Drehachse 22, der Kreismittelpunkt des kreisbogenförmigen zweiten Abschnitts liegt auf der Drehachse 22. Der Transportpfad 14 weist also in der Strahlenfalle 18 zwei Ecken auf, an denen die einzelnen Abschnitte aneinander angrenzen. Im gezeigten Beispiel liegt der zweite Abschnitt in einer zur Drehachse 22 orthogonalen Ebene. Die Strahlenfalle 18 ist so ausgelegt, dass sich die Intensität der Röntgenstrahlung entlang des Transportpfades 14 in Richtung zu der Lagerungsposition 12 reduziert, sodass an der Lagerungsposition eine z.B. um mehr als 99,9% reduzierte Intensität vorliegt als an der Analyseposition 14.

Ein Ausstrahlen von Röntgenstrahlung durch die Strahlungsquelle 8 auch während des Be-/Entladevorgangs der Analysekammer 2 mit der Probe 200 ermöglicht, dass verschiedene Proben mit denselben Röntgenstrahlungsparametern (z.B. Intensität, Spektrum, räumliche Verteilung) bestrahlt werden können. Da aufgrund der Strahlenfalle 18 keine Türen oder anderen beweglichen Teile für die Sicherstellung des Strahlenschutzes notwendig sind, wird auch keine Sicherheitselektronik wie z.B. Interlockschalter benötigt, sodass das Geräte 100 trotz hohem Röntgen-Sicherheitsniveau vergleichsweise kostengünstig herzustellen ist. Auch entfällt eine Synchronisierung der Transportvorrichtung 10 mit weiteren beweglichen Komponenten, denn im Transportpfad 14 sind keine derartigen, den Transportpfad 14 blockierenden Elemente vorgesehen.

Die Strahlenfalle 18 ist bezogen auf die Analysekammer 2 festgelegt und weist kein bewegliches Teil auf. Stattdessen umfasst die Strahlenfalle 18 eine Wand 28 mit einer ersten Oberfläche 30 und einer zweiten Oberfläche 32, sowie eine Wand 34 mit einer ersten Oberfläche 36 und einer zweiten Oberfläche 38. In den beiden zueinander senkrecht stehenden, planen Wänden 28, 34 sind Durchgangsöffnungen 40, 42 vorgesehen. Der Transportpfad 14 verläuft kurvenförmig in Richtung zu der Analyseposition 16 von einem ersten Raumbereich 44 durch die Durchgangsöffnung 40 der Wand 28 in einen zweiten Raumbereich 46, und von einem der Wand 34 zugeordneten ersten Raumbereich 48 durch deren Durchgangsöffnung 42 auf deren zweiten Raumbereich 50, sowie von dort durch die Eingangsöffnung 6 in die Analysekammer 2. Dabei steht der Transportpfad 14 im Bereich der Durchgangsöffnungen 40, 42 jeweils senkrecht zu der Wand 28, 34 mit der jeweiligen Durchgangsöffnung 40, 42. Es ist auch denkbar, weitere Wände vorzusehen oder diese auf andere Weise anzuordnen. Beispielsweise können mehrere Wände nach Art eines Labyrinths angeordnet sein, die zusammen die Strahlenfalle 18 bilden. Die Strahlenfalle weist im gezeigten Beispiel ferner ein im wesentlichen topfförmiges Gehäuse 58 auf, durch dessen Inneres sich der Transportpfad 14 erstreckt. Dieses Gehäuse 58 kann abnehmbar an die Analysekammer 2 gekoppelt sein. Vorzugsweise ist die Transportvorrichtung 10 bezogen auf das Gehäuse 58 festgelegt. In Kombination mit dem nichtlinearen Verlauf des Transportpfades 14 durch die Strahlenfalle 18 kann die Strahlung an der Lagerungsposition 12, die in einem für einen Benutzer erreichbaren Bereich des Geräts 100 liegt, besonders stark minimiert werden.

Die Wand 28 und/oder 34 kann so ausgelegt sein, dass sie ein Hineingreifen eines Benutzers entlang des Transportpfads 14 in die Analysekammer 2 verhindert. Hierzu kann die jeweilige Durchgangsöffnung 40, 42 entsprechend dimensioniert sein oder/und die Wände 28, 34 können bezogen auf einander oder/und bezogen auf die Seitenwand 4 der Analysekammer 2 entsprechend schräg und/oder versetzt angeordnet sein.

Das Gerät 100 umfasst außerdem eine Vielzahl von bezogen auf die Analysekammer unbeweglich angeordneten Bereithaltungseinheiten 52, wobei jede Bereithaltungseinheit 52 jeweils eine Proben-Lagerungsposition 12 außerhalb der Analysekammer 2 vorgibt. Die Transportvorrichtung 10 ist dazu ausgelegt, eine Probe 200 wahlweise aus einer der Lagerungspositionen 12 entlang eines jeweiligen Transportpfades 14 in die Analyseposition 16 innerhalb der Analysekammer zu 2 bewegen.

Eine jede Bereithaltungseinheit 52 umfasst eine Aussparung 54, die dazu ausgelegt ist, einen Probenständer 300 aufzunehmen, der die Probe 200 trägt. Der Greifer 17 kann den Probenständer 300 greifen, sodass eine anschließende Bewegung des Greifers 17 eine Bewegung der von dem Probenständer 300 getragenen Probe 200 bewirkt. Die Aussparungen 54 liegen im gezeigten Beispiel in derselben Ebene auf einer Kreisbahn und sind gleichverteilt um die Drehachse 22 angeordnet. Das Gerät 100 ist dabei so ausgelegt, dass eine der Bereithaltungseinheiten 52, aus deren Aussparung 54 ein Probenständer 300 durch die Transportvorrichtung 10 entnommen wurde, blockiert, sodass sie keinen anderen Probenständer 300 aufnehmen kann. Nur der entnommene Probenständer 300 kann dann durch die Transportvorrichtung 10 in die Aussparung 54 eingesetzt werden. Eine manuelle Bestückung der Aussparung 54 durch einen anderen Probenständer 300 wird so unterbunden. Dies ermöglicht insbesondere eine einfachere Steuerung des Geräts 10, denn es muss bei dem Transport der Probe 200 aus der Analysekammer 200 nicht detektiert werden, ob deren vorherige Lagerungsposition 12 noch frei ist.

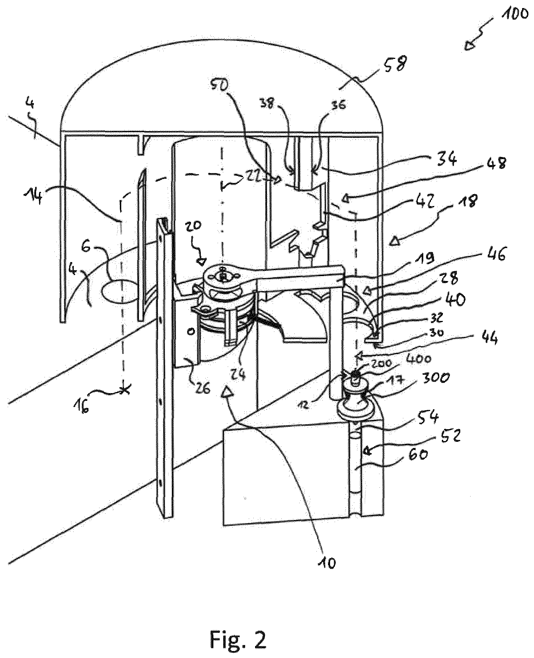

In Fig. 2-4 ist ein vor einer Schnittebene 56 liegender Teil des Gehäuses 58 des Geräts 100 ausgeblendet. In Fig. 2-4 ist das Gerät 100 in unterschiedlichen Zuständen gezeigt, nämlich zu unterschiedlichen Zeitpunkten während des Transports des Probenständers 300 mit der von diesem getragenen Probe 200 durch die Transportvorrichtung 10. Es ist zu erkennen, dass in diesem Fall die Durchgangsöffnungen 40, 42 und die Eingangsöffnung 6 auf eine Außenkontur eines Längs- bzw. Querschnitts durch den Probenständer 300 abgestimmt sind. Die Durchgangsöffnungen 40, 42 gestatten daher wie ein Schlüsselloch nur ein Hindurchführen von entsprechend geformtem Probenständern 300. So kann ein Einbringen von unzulässigen Probenständern in die Analysekammer 2 unterbunden werden. Das Gerät 100 kann so ausgelegt sein, dass es eine Kollision einer durch die Transportvorrichtung 10 bewegten Probe 200 bzw. eines mit der Probe 200 bestückten Probenträgers oder/und Probenständers mit einer der Wände 28, 34 oder mit der Seitenwand 4 detektiert und in diesem Fall die Probe 200 bzw. den mit der Probe 200 bestückten Probenträger oder/und Probenständer entlang des Transportpfads 14 zurück in die Lagerungsposition 12 bewegt.

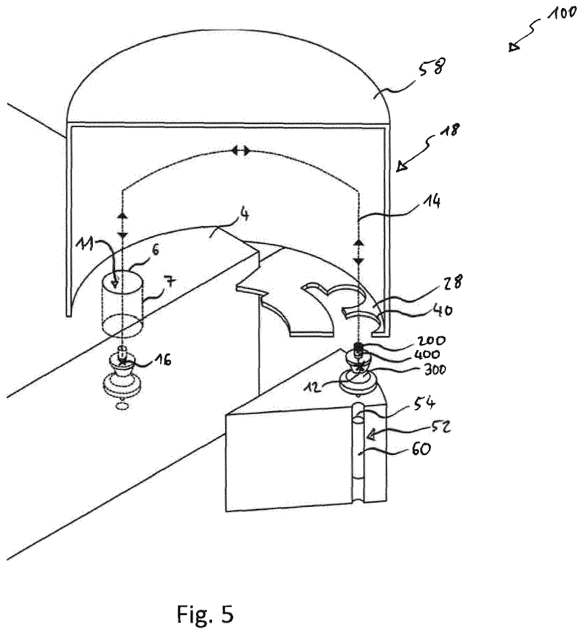

Auch andere Ausgestaltungen des Geräts 100 sind denkbar. In der beispielhaften Variante gemäß Fig. 5 umfasst das Gerät 100 eine in der Analysekammer 2 angeordnete, an die Öffnung 6 anschließende, im Wesentlichen zylindrische Abschirmungswand 7, deren Grundriss der Außenkontur der Eingangsöffnung 6 entspricht. Der Transportpfad 14 verläuft durch den von der zylindrischen Abschirmungswand 7 umfassten Raumbereich 11. Eine solche Abschirmungswand 7 kann auch in der beispielhaften Ausführungsform gemäß Fig. 1-4 vorgesehen sein. Das Gerät 100 umfasst in der Variante gemäß Fig. 5 ebenfalls die Wand 28, nicht jedoch die Wand 34. In einer anderen Variante kann die Wand 34 vorgesehen, die Wand 28 hingegen weggelassen werden. Auch in dieser anderen Variante könnte dann die Abschirmungswand 7 vorgesehen sein oder nicht.

In jedem Fall ist denkbar, die Seitenwand 4, die Abschirmungswand 7, die Wand 28 oder/und die Wand 34 als Strahlenschutzwand auszubilden. Eine solche Strahlenschutzwand kann z.B. aus einem Kunststoff-Kompositmaterial mit einem hohen Gewichtsanteil (z.B. >80%) von Metall gefertigt sein. Das Kunststoff-Kompositmaterial kann eine hohe Dichte (z.B. >7 g/cm³) aufweisen und daher besonders gut zum Abschwächen von Röntgenstrahlung geeignet sein.

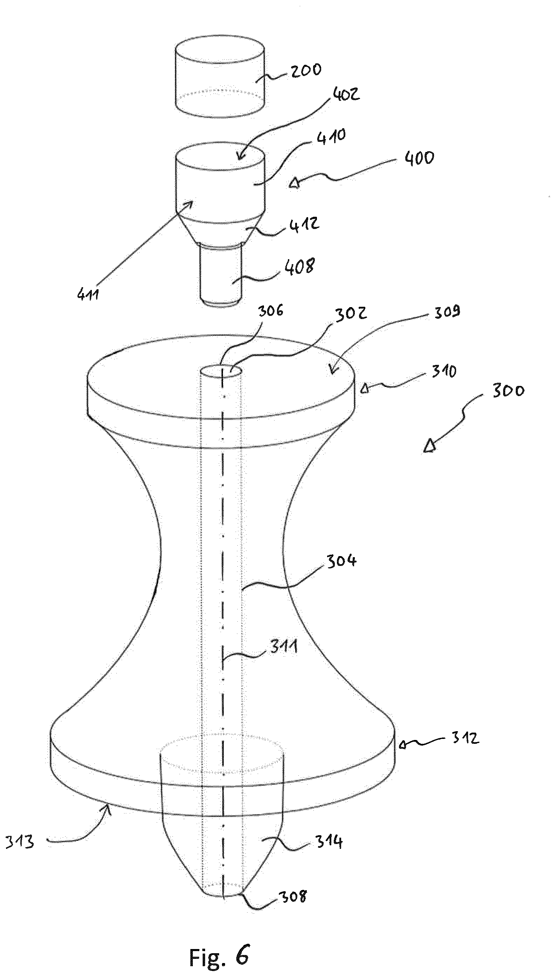

Fig. 6 zeigt einen beispielhaften Probenständer 300, einen beispielhaften Probenträger 400 und eine beispielhafte Probe 200. Der Probenständer 300 und der Probenträger 400 können aus einem Kompositmaterial gefertigt sein, das Kunststoff und Wolfram umfasst. Dies reduziert den Einfluss des Probenständers 300 und des Probenträgers 400 auf die Röntgenuntersuchung der Probe 200.

Der Probenträger 400 ist dazu ausgelegt, die mittels Röntgenstrahlung zu analysierende Probe 200 vor und während der Durchführung einer Röntgenuntersuchung der Probe 200 zu tragen. Der Probenträger 400 ist dazu ausgelegt, direkt an der Probe 200 befestigt zu werden oder umgekehrt. Der Probenträger ist insbesondere dazu ausgelegt, mit der Probe 200 oder/und einem Gewebesubstrat 500, aus welcher die Probe 200 zu entnehmen ist, verklebt zu werden. Hierzu kann die plane Oberseite 402 des Probenträgers 400 mit einem Klebstoff beschichtet sein. Der Probenträger 400 ist dabei als Einmalartikel ausgebildet, sodass er zusammen mit der daran befestigten Probe 200 nach der Röntgenanalyse zu lagern oder zu entsorgen ist.

Der Probenträger 400 ist zum Koppeln an den Probenständer 300 ausgebildet. Hierzu weist der Probenträger 400 einen Pin 408 auf, der in eine Ausnehmung 302 des Probenständers 300 eingesetzt werden kann, um den Probenträger 400 an den Probenständer 300 zu koppeln. Auf diese Weise kann die Probe 200 an den Probenständer 300 gekoppelt werden.

Der Probenträger 400 ist axialsymmetrisch geformt und umfasst einen zylindrischen Abschnitt 410 mit der Oberseite 402, sowie einen daran anschließenden, sich in Richtung der Unterseite des Probenträgers 400 verjüngenden kegelstumpfförmigen Abschnitt 412. An letzterem ist der Pin 408 angeordnet. Diese Form ermöglicht ein vollständiges Aufnehmen des Probenträgers 400 in eine Gewebestanze 600, wenn die Gewebestanze 600 auf den Probenträger 400 aufgesteckt und relativ zum Probenträger 400 in Stanzrichtung 602 verschoben wird. Die Umfangsfläche 411 des zylindrischen Abschnitts 410 dient der Gewebestanze 600 dabei als Linearführung, selbiges gilt für den Pin 408. Man kann also sagen, dass der Probenträger 400 so ausgelegt ist, dass er eine lineare Führung der Gewebestanze 600 in axialer Richtung des Probenträgers 400 bereitstellt.

Der Probenständer 300 ist so ausgelegt, dass die Transportvorrichtung 10, insbesondere der Greifer 17, an den Probenständer 300 koppeln und diesen bewegen kann, um die von dem Probenständer 300 getragene Probe 200 entlang des Transportpfades 14 zu bewegen. Die zum Koppeln mit dem Pin 408 ausgelegte Ausnehmung 302 ist als innenliegender Kanal 304 ausgebildet und mündet in zwei axial beabstandete, jeweils von außen zugängliche Endöffnungen 306, 308. Der Kanal 304 verläuft dabei zentral im Probenständer 300 entlang von dessen Drehsymmetrieachse 311. Der Kanal 304 ist dazu ausgelegt, dass der Pin 408 des an den Probenständer 300 gekoppelten Probenträgers 400 durch Einführen eines Werkzeugs in den Kanal 304 von der anderen Seite her aus dem Kanal 300 gedrückt werden kann, um den Probenträger 400 von dem Probenständer 300 zu entkoppeln.

Der Probenständer 300 weist an seiner Oberseite 309 einen kreisscheibenförmigen ersten (oberen) Endabschnitt 310 und an seiner Unterseite 313 einen ebenfalls kreisscheibenförmigen zweiten (unteren) Endabschnitt 312 auf, die parallel ausgerichtet und axial beabstandet sind. An dem unteren Endabschnitt 312 ist ein zylinderförmiger oder im Wesentlichen kegelstumpfförmiger Kopplungsfortsatz 314 vorgesehen, der dazu ausgelegt ist, zum Koppeln des Probenständers 300 in eine der Aussparungen 54 eingesetzt zu werden. Zwischen dem oberen und dem unteren Endabschnitt 310, 312 ist der Probenständer radial verjüngt ausgebildet. Dieser Bereich kann zum Koppeln mit dem Greifer 17 vorgesehen sein. Der Probenständer 300 kann selbstaufrichtend ausgebildet sein, wobei sein Masseschwerpunkt vorzugsweise näher am unteren Endabschnitt 312 liegt als an dem oberen Abschnitt 310. Wenn der Probenständer 300 aufrecht oder waagrecht auf einer ebenen Oberfläche platziert wird, liegt er anschließend im Ruhezustand mit dem Kopplungsfortsatz 314 und dem unteren Endabschnitt 312 auf der ebenen Oberfläche auf. Der daran gekoppelte Probenträger 400 und die Probe 200 sind dann von der ebenen Oberfläche beabstandet.

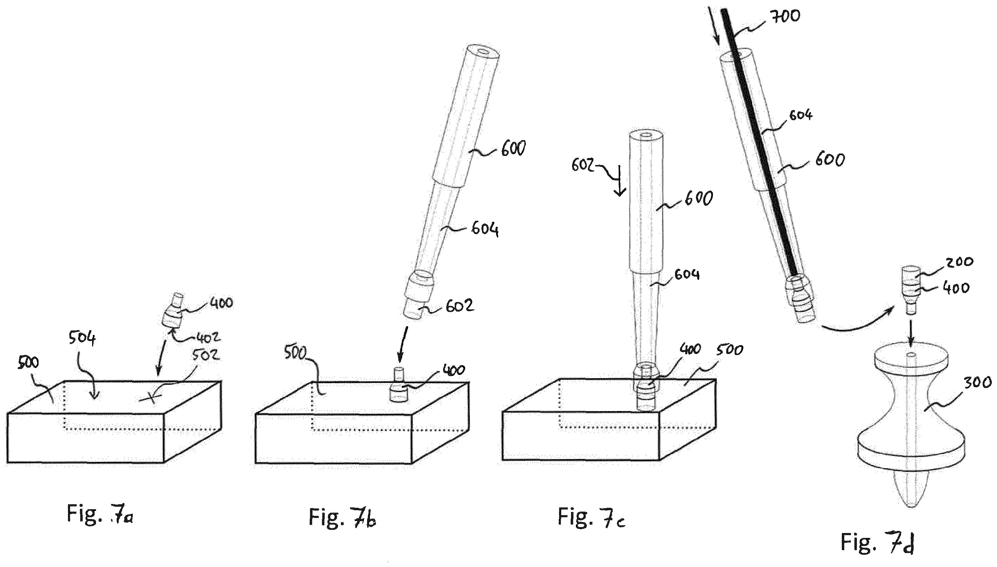

In Fig. 7a-7e sind Verfahrensschritte gezeigt, die unter Nutzung der oben beschriebenen Komponenten durchgeführt werden können.

Wie in Fig. 7a dargestellt, kann der Probenträger 400 an einer gewünschten Position 502 auf ein Gewebesubstrat 500 aufgeklebt werden. Dabei kann das Substrat 500 oder/und die Oberseite 402 mit Klebstoff versehen sein. Die Oberseite 402 des Probenträgers 400 ist dann mit einer Oberfläche 504 des Gewebesubstrats verklebt.

Wie in Fig. 7b gezeigt, kann eine Gewebestanze 600 auf den aufgeklebten Probenträger 400 aufgesetzt werden. Die Gewebestanze 600 weist eine zylindermantelförmige Schneide 602 auf, die nach dem Aufsetzen der Gewebestanze 600 auf den Probenträger 400 radial außerhalb neben der Umfangsfläche 411 des zylindrischen Abschnitts 410 des Probenträgers 400 liegt. Die Umfangsfläche 411 stellt eine Linearführung für die Gewebestanze 600 bereit, sodass die Gewebestanze 600 durch den Probenträger 400 orthogonal zur Oberfläche 504 linearbeweglich geführt wird. In der Gewebestanze kann ein innenliegender Kanal 604 vorgesehen sein, durch den eine ausgestanzte Gewebeprobe anhand eines Werkzeugs 700 aus der Gewebestanze 600 herausgedrückt werden kann. Der Pin 408 ist dabei so dimensioniert, dass er in diesen Kanal 604 passt. Auch der Pin 408 kann daher eine Linearführung für die Gewebestanze 600 bereitstellen.

Wie in Fig. 7c gezeigt, kann die aufgesetzte Gewebestanze 600 nun in die von der Linearführung vorgegebene Stanzrichtung 602 orthogonal zur Oberfläche 504 bewegt werden, sodass die Schneide 602 in das Gewebesubstrat 500, beispielsweise in Paraffin eingebettetes Gewebe, eingedrückt wird. So stanzt die Gewebestanze 600 zuverlässig an der gewünschten Position 502 eine Gewebeprobe 200 aus dem Substrat 500.

Wie in Fig. 7d dargestellt, kann der Probenträger 400 nun von der Gewebestanze 600 getrennt werden, beispielsweise durch Herausdrücken des Pins 408 aus dem Kanal 604 durch Einführen eines Werkzeugs 700 in die dem Pin 408 gegenüberliegende Seite des Kanals 604. Die Gewebeprobe 200 wird hierbei nicht gefährdet, denn das Werkzeug 700 steht beim Herausdrücken des Probenträgers 400 nur mit diesem in Kontakt, nicht jedoch mit der Gewebeprobe 200. Da die Gewebeprobe 200 an dem Probenträger 400 festklebt, kann dieser gegriffen und an den Probenständer 300 gekoppelt werden, um die Probe 200 relativ zu dem Probenständer 300 festzulegen. Hierbei dient der Pin 408 als Kopplungselement, das in die Ausnehmung 302 des Probenständers 300 eingeführt wird. So kann die zuverlässig an der gewünschten Position 502 ausgestanzte Probe 200 beschädigungsfrei auf dem Probenständer 300 angeordnet werden. Wenn der Probenständer 300 selbstaufrichtend gestaltet ist und die vergleichsweise breiten oberen und unteren Endabschnitte 310, 312 aufweist, kann eine Beschädigung und Kontaminierung der Probe 200 selbst dann verhindert werden, wenn der Probenständer 300 aus Versehen auf den Boden oder einen Labortisch fällt. Denn die Probe 200 wird durch diese Auslegung des Probenständers 300 zuverlässig vom Boden ferngehalten.

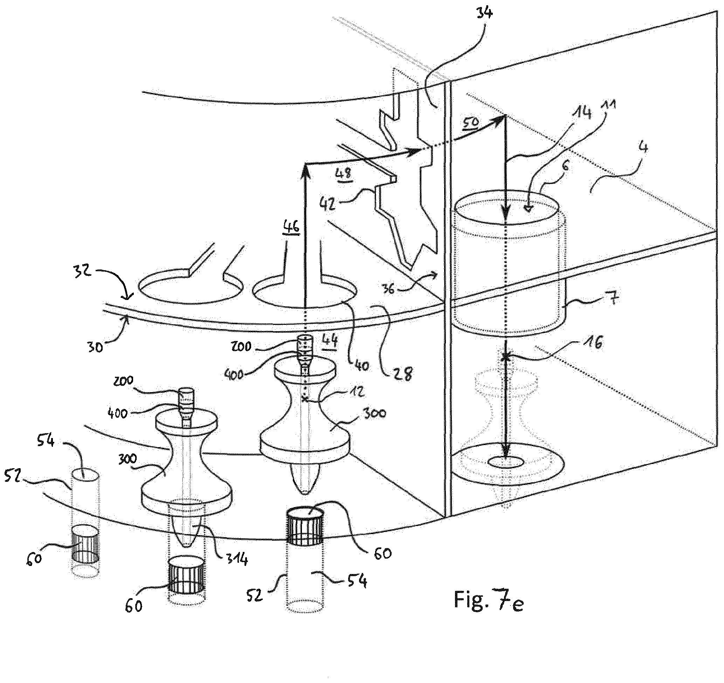

Wie in Fig. 7e gezeigt, kann der Kopplungsfortsatz 314 des Probenständers 300 nach dem Ankoppeln des Probenträgers 400 und der daran festgeklebten Probe 200 passgenau in eine der Aussparungen 54 eingesetzt werden. So wird die Probe 200 in der entsprechenden Lagerungsposition 12 des Geräts 100 positioniert. Die Transportvorrichtung 10 kann dann an den Probenständer 300 koppeln und die Probe 200, die an dem Probenträger 400 festgeklebt ist, der wiederum an den Probenständer 300 gekoppelt ist, entlang des Transportpfades 14 durch die Öffnungen 40, 42 der Strahlenfalle 18 hindurch und durch die Eingangsöffnung 6 der Seitenwand 4 hindurch bis in die Analyseposition 16 innerhalb der Analysekammer 2 transportieren. Gleichzeitig kann die Aussparung 54, aus welcher der Probenständer 300 entnommen wurde, mit einem Blockierelement 60 blockiert werden, sodass sich kein anderer Kopplungsfortsatz 314 in diese Aussparung 54 einsetzen lässt. Dies ermöglicht eine eindeutige Zuordnung der entsprechenden Aussparung 54 zu der Probe 200.

In der Analysekammer 2 kann die Probe 200 mittels von der Strahlungsquelle 8 ausgestrahlten Röntgenstrahlung untersucht werden, beispielsweise durch Röntgenbildaufnahme. Anschließend kann die Probe 200 wieder zusammen mit dem Probenträger 400 und dem Probenständer 300 aus der Analysekammer 2 entlang des Transportpfades 14 zurück in Richtung der Lagerungsposition 12 bewegt werden. Dort angekommen kann die Aussparung 54 entriegelt werden, indem das Blockierelement 60 freigegeben oder aktiv nach unten bewegt wird. Die Strahlungsquelle 8 kann dabei kontinuierlich Röntgenstrahlung ausstrahlen. Nun kann eine weitere Probe 200 in die Analysekammer transportiert und dort analysiert werden. Der kontinuierliche Betrieb der Strahlungsquelle 8 ermöglicht gleichbleibende Strahlungsbedingungen in der Analysekammer. Da weder Türen noch sonstige Verschlussvorrichtungen für die Öffnungen 6, 40, 42 vorgesehen sind, werden der konstruktive Aufbau und die Fehleranfälligkeit reduziert, wobei die Strahlenfalle 18 die Sicherheit des Bedieners gewährleistet.

Weitere Details der Erfindung werden nun in anderen Worten geschildert.

Das Gewebesubstrat 500 kann ein in der Pathologie genutztes Substrat sein, beispielsweise biologisches Gewebe, das in Formalin fixiert und in Paraffin eingebettet ist. Aus dem Substrat 500 kann mittels Biopsiestanze 600 ein Subvolumen als Probe 200 herausgelöst werden.

In gängigen Lösungen ist eine exakte Platzierung der Stanze 600 nur schwer möglich. Ebenso kann in gängigen Lösungen insbesondere beim Herausdrücken der Probe 200 aus der Stanze 600 eine Beschädigung des empfindlichen Materials (Risse, Brüche, Deformationen) herbeigeführt werden. Die Probe 200 muss daraufhin in der Regel mit einem weiteren Werkzeug auf einem Probenhalter befestigt werden, wodurch die Sterilität und die Unversehrtheit der Probe 200 erneut gefährdet wird. Außerdem muss die Probe 200 im Nachhinein wieder von dem Probenhalter gelöst werden. Hinzu kommt, dass gängige Lösungen darauf setzen, die Röntgenstrahlungsquelle während einem Probenwechsel abzuschalten, und die Analysekammer während laufender Röntgenbestrahlung komplett abzuschirmen. Hierdurch wird unter Anderem der konstruktive Aufwand und die Gerätefehleranfälligkeit erhöht.

Wie oben beschrieben, wird ein Probenträger 400 bereitgestellt, an welchem eine FFPE-Probe befestigt werden kann. Der Probenträger 400 ermöglicht eine präzise Führung der Stanze 600, er erleichtert und sichert also den Prozess des Stanzens. Außerdem ist ein Probenständer 300 vorgesehen, welcher den Probenträger 400 aufnehmen kann und ein automatisches Be- und Entladen des Geräts 100 ermöglicht. Der Probenständer hat einen tiefen Schwerpunkt. Wenn er herunterfällt oder umfällt, berührt die Probe 200 den Boden nicht und der Probenständer 400 rollt nicht weg, sondern rollt auf einer Kreisbahn. Die Strahlenfalle 18 des Geräts 100 ist als passive Beladeschikane ausgebildet und stellt außerdem eine Formkontrolle für den Probenständer 300 bereit.

Die vorliegende Offenbarung stellt auch ein Verfahren mit einem oder mehreren der folgenden Schritte bereit:
a) Stanzposition 502 identifizieren, Koordinaten auf Substrat 500 übertragen oder automatisiert an Stanzroboter übermitteln. Die Folgenden Schritte können dann automatisiert mit dem Roboter oder manuell durchgeführt werden.
b) Temperieren des Substrats 500 auf 27 °C oder eine auf das jeweilige Einbettungsmaterial abgestimmte Temperatur, um Material optimal schneiden zu können.
c) Probenträger 400 mit klebriger Oberfläche (vorbehandelt oder noch zu bestreichen) wird präzise auf der zu extrahierenden Probe platziert. Alternativ ist es möglich, die zu stanzende Stelle 502 mit Klebstoff zu beschichten und den Probenträger 400 darauf zu setzen.
d) Zuordnung der Probe zum Probenträger 400 (Farbe/Muster) kann dokumentiert werden
e) Stanzen (um den Probenträger 400 herum), Probenträger 400 stabilisiert dabei die mit diesem verklebte Oberfläche 504 und führt die Stanze 600 und schützt im Nachgang die ausgestanzte Probe 200.
f) Nach dem Herausdrücken der Probe 200 aus der Stanze 600 (z.B. anhand des Werkzeugs 700) muss die Probe 200 nicht mehr (bswp. mit einer Pinzette) gefasst werden, dies kann über den Probenträger 400 erfolgen.
g) Stecken des Probenträgers 400 mit der Probe 200 auf den Probenständer 300, bis zum mechanischen Anschlag, die Probe 200 ist somit in optimaler Höhe für den Scan, kann so sicher gelagert werden und kann automatisch in das Gerät 100 geladen werden. Der Probenständer 300 besteht zu einem hohen Anteil aus Wolfram, was die Streustrahlung und damit die Bild- und Rekonstruktionsartefakte des 3D-Scans reduziert.
h) Der Probenständer 300 wird von dem Greifer 17 in dessen Taille gefasst und durch die Strahlenfalle 18, die als Beladeschikane einer passiven Strahlenschutzhülle ausgebildet ist, in die Analysekammer bzw. den Untersuchungsraum (Röntgensicherheitsbereich) geführt. In der Strahlenfalle 18 wird die Ausdehnung der Probe 200, des Probenträgers 400 und des Probenständers 300 in alle Raumrichtungen überprüft (Lochblendenprinzip bzw. Schlüssellochprinzip). Die Strahlenfalle 18 ist trotz kontinuierlicher Öffnung und ohne bewegliche Strahlenschutzkomponenten intrinsisch röntgensicher. Die Röntgenquelle 8 kann also kontinuierlich laufen, was für gleichbleibende Untersuchungsparameter sorgt und einen schnelleren Messstart gewährleistet. Die Strahlungsquelle kann z.B. mit einer Spannung von 60kV betrieben werden, der Strahlenschutz durch die Strahlenfalle 18 kann hingegen auf mehr ausgelegt sein (~80kV). Die Strahlenfalle 18 kann als 3D-gedrucktes Bauteil ausgebildet sein. Als Material für die Strahlenfalle 18 kann z.B. mit Glykol modifiziertes Polyethylenterephtalat (PETG) mit 75% Massenanteil Wolframpulver genutzt werden. Bei der genannten Energie ist eine Materialdicke der Wände von 7 mm vorteilhaft. Im Fall höherer Röntgenenergien kommt eine Verdickung der Wände in Betracht.
i) Die Aussparung 54 der in der Probenbereitstellung gerade geladenen Probe 200 wird für die Dauer der Messung mechanisch verschlossen, damit der Anwender dort nicht versehentlich eine weitere Probe platzieren kann. Nach dem Scan wird die Probe 200 wieder an die vorherige Lagerungsposition 12 gestellt.
j) Entfernung von Probe 200 mitsamt Probenträger 400 vom Probenständer 300, Archivierung der Probe 200 mitsamt Probenträger 400 ist möglich. Probenständer 300 kann wiederverwendet werden. Der Probenständer 300 enthält einen zentralen Kanal 304, durch den der Probenträger 400 mit einem Werkzeug herausgedrückt werden kann. Somit kann auch ein Probenträger 400 wieder entnommen werden, der mit großer Haftreibung im Probenständer 300 befestigt ist, was ein Verrutschen während des 3D-Scans verhindert.

Es versteht sich, dass die Merkmale der hierin beschriebenen Aspekte mit den Merkmalen aus der detaillierten Beschreibung der Zeichnungen kombinierbar sind und umgekehrt. Weitere Abwandlungen der Aspekte und Beispiele sind ebenso denkbar.

## Patentansprüche

1. Gerät (100) zur Handhabung von mittels Röntgenstrahlung zu analysierenden Proben (200), umfassend:
eine Analysekammer (2), die dazu ausgelegt ist, eine Probe (200) aufzunehmen, wobei die Analysekammer (2) eine Seitenwand (4) mit einer Eingangsöffnung (6) umfasst;
eine Strahlungsquelle (8), die dazu ausgelegt ist, Röntgenstrahlung in die Analysekammer (2) auszustrahlen;
eine Transportvorrichtung (10), die dazu ausgelegt ist, eine Probe (200) aus einer Lagerungsposition (12) außerhalb der Analysekammer (2) entlang eines Transportpfades (14) in eine Analyseposition (16) innerhalb der Analysekammer (2) zu bewegen, wobei der Transportpfad (14) durch die Eingangsöffnung (6) verläuft; und
eine Strahlenfalle (18), durch welche der Transportpfad (14) nichtlinear verläuft, wobei die Strahlenfalle (18) so ausgelegt ist, dass sich die Intensität der Röntgenstrahlung entlang des Transportpfades (14) in Richtung zu der Lagerungsposition (12) reduziert.

2. Gerät nach Anspruch 1, wobei die Strahlenfalle (18) mindestens eine bezogen auf die Analysekammer (2) unbewegliche Wand (28; 34) mit einer ersten Oberfläche (30; 36) und einer gegenüberliegenden zweiten Oberfläche (32; 38) umfasst, wobei sich ein Abschnitt des Transportpfads (14) zwischen einem der ersten Oberfläche (30; 36) zugewandten ersten Raumbereich (44; 48) und einem der zweiten Oberfläche (32; 38) zugewandten zweiten Raumbereich (46; 50) erstreckt.

3. Gerät nach Anspruch 2, wobei die mindestens eine Wand (28; 34) eine Wand umfasst, die in einer von dem Transportpfad (14) geschnittenen Ebene liegt.

4. Gerät nach Anspruch 2 oder 3, wobei die mindestens eine Wand (28; 34) eine Wand umfasst, die eine Durchgangsöffnung (40; 42) aufweist, wobei der Transportpfad (14) durch die Durchgangsöffnung (40; 42) verläuft.

5. Gerät nach einem der Ansprüche 2 bis 4, wobei die mindestens eine Wand (28; 34) mehrere Wände umfasst, die labyrinthartig oder/und zueinander schräg angeordnet sind.

6. Gerät nach einem der Ansprüche 1 bis 5, ferner umfassend:
eine Vielzahl von bezogen auf die Analysekammer (2) unbeweglich angeordneten Bereithaltungseinheiten (52), wobei jede Bereithaltungseinheit (52) jeweils eine Lagerungsposition (12) außerhalb der Analysekammer (2) vorgibt, wobei die Transportvorrichtung (10) dazu ausgelegt ist, eine Probe (200) wahlweise aus einer der Lagerungspositionen (12) entlang eines jeweiligen Transportpfades (14) in die Analyseposition (16) innerhalb der Analysekammer (2) zu bewegen.

7. System zur Handhabung von mittels Röntgenstrahlung zu analysierenden Proben, umfassend:
das Gerät (100) nach Anspruch 6; und
mindestens einen Probenständer (300) für eine Probe (200),
wobei jede Bereithaltungseinheit (52) zum Bereithalten eines jeweiligen Probenständers (300) ausgelegt ist, und wobei das System so ausgelegt ist, dass die Transportvorrichtung (10) an einen bereitgehaltenen Probenständer (300) koppeln und diesen Probenständer (300) im gekoppelten Zustand bewegen kann, um eine von diesem Probenständer (300) getragene Probe (200) aus deren Lagerungsposition (12) in die Analyseposition (16) zu bewegen.

8. System nach Anspruch 7, wobei das Gerät (100) so ausgelegt ist, dass eine der Bereithaltungseinheiten (52), von der ein Probenständer (300) durch die Transportvorrichtung (10) entfernt wurde, gegen ein Bereithalten eines weiteren Probenständers (300) blockiert ist.

9. System nach Anspruch 7 oder 8, wobei der mindestens eine Probenständer (300) eine Unterseite (313) umfasst sowie eine Oberseite (309), die einer Probe (200) zugewandt ist wenn der Probenständer (300) die Probe (200) trägt, und wobei der Probenständer (300) so ausgelegt ist, dass die Oberseite (309) in Ruhelage nach einem Platzieren des Probenständers (300) auf einer flachen Oberfläche von der flachen Oberfläche weiter entfernt ist als die Unterseite (313).

10. System nach einem der Ansprüche 7 bis 9, ferner umfassend:
einen Probenträger (400), der dazu ausgelegt ist, mit einer Probe (200) verbunden oder verklebt zu werden,
wobei der Probenträger (400) derart an einen von einer der Bereithaltungseinheiten (52) bereitgehaltenen Probenständer (300) koppelbar ist, dass eine mit dem Probenträger (400) verbundene oder verklebte Probe (200) in der Lagerungsposition (12) dieser Bereithaltungseinheit (54) angeordnet wird.

11. System nach Anspruch 10, wobei der Probenständer (300) eine Ausnehmung (302) aufweist, in welche ein Vorsprung (408) des Probenträgers (400) zum Koppeln an den Probenständer (300) einsetzbar ist.

12. System nach einem der Ansprüche 10 bis 11, wobei der Probenträger (400) so ausgelegt ist, dass er von einer Gewebestanze (600) umschließbar ist und dabei für die Gewebestanze (600) eine Linearführung bereitstellt, wobei die Linearführung insbesondere senkrecht zu einer mit dem Probenträger (400) verbundenen oder verklebten Oberfläche (504) der Probe (200) verläuft.

13. System nach einem der Ansprüche 7 bis 12 mit dem Gerät (100) nach zumindest Anspruch 4, wobei eine Außenkontur der Durchgangsöffnung (40; 42) einen Abschnitt umfasst, der auf eine Außenkontur eines Schnitts durch den mindestens einen Probenständer (300) oder/und durch den mindestens einen Probenständer (300) mit daran gekoppeltem Probenträger (400) abgestimmt ist.

14. Verfahren zur Handhabung von mittels Röntgenstrahlung zu analysierenden Proben, umfassend:
Steuerung einer Transportvorrichtung (10) derart, dass die Transportvorrichtung (10) eine Probe aus einer Lagerungsposition (12) außerhalb einer Analysekammer (2) entlang eines Transportpfades (14) in eine Analyseposition (16) innerhalb der Analysekammer (2) bewegt, wobei der Transportpfad (14) durch eine Eingangsöffnung (6) in einer Seitenwand (4) der Analysekammer (2) verläuft, wobei eine Strahlungsquelle (8) vorgesehen ist, die dazu ausgelegt ist, Röntgenstrahlung in die Analysekammer (2) auszustrahlen, wobei der Transportpfad (14) nichtlinear durch eine Strahlenfalle (18) verläuft, und wobei die Strahlenfalle (18) so ausgelegt ist, dass sich die Intensität der Röntgenstrahlung entlang des Transportpfades (14) in Richtung zu der Lagerungsposition (12) reduziert; Koppeln eines mit einer Probe (200) verbundenen oder verklebten Probenträgers (400) an einen Probenständer (300), und Bewegen des Probenständers (300) mit daran gekoppeltem Probenträger (400), um die mit dem Probenträger (400) verbundene oder verklebte Probe (200) entlang eines Transportpfades (14) aus einer Lagerungsposition (12) außerhalb einer Analysekammer (2) in eine Analyseposition (16) innerhalb der Analysekammer (2) zu bewegen; oder/und Aufkleben eines Probenträgers (400) auf ein Gewebesubstrat (500), Platzieren einer Gewebestanze (600) auf dem der Gewebestanze (600) eine Linearführung bereitstellenden Probenträger (400), Ausstanzen einer Probe (200) durch Eindrücken der Gewebestanze (600) in das Gewebesubstrat (500) entlang der Linearführung, und Entfernen des Probenträgers (400) mit der damit verklebten Probe (200) von der Gewebestanze (600).

15. Verfahren nach Anspruch 14, durchgeführt unter Verwendung des Geräts (100) nach einem der Ansprüche 1 bis 6 oder unter Verwendung des Systems oder einer Komponente (100; 300; 400) des Systems nach einem der Ansprüche 7 bis 13.
